# EUROPÄISCHE PATENTSCHRIFT

(11) **EP 0 585 774 B1**
(45) Veröffentlichungstag und Bekanntmachung des Hinweises auf die Patenterteilung: **24.04.1996**
(21) Anmeldenummer: 93113455.5
(22) Anmeldetag: 24.08.1993
(51) Int. Cl.: B62D 33/06

(54) **Fahrerplattformaufhängung**
Driver's cab suspension
Suspension pour cabine conducteur

(30) Priorität: 15.12.1992 DE 4242166; 31.08.1992 DE 4228959
(43) Veröffentlichungstag der Anmeldung: 09.03.1994
(73) Patentinhaber: DEERE & COMPANY, Moline, Illinois 61265 (US)
(72) Erfinder: Hasselmann, Uwe, D-64331 Weiterstadt (DE); Höfle, Jens, D-64342 Jugenheim (DE); Glaser, Fritz, Dr., D-66482 Zweibrücken (DE)
(74) Vertreter: Feldmann, Bernhard

(56) Entgegenhaltungen:
- DE-A- 1 555 826
- DE-A- 2 548 749
- DE-A- 2 801 261
- FR-A- 2 483 979
- GB-A- 2 244 745
- US-A- 3 059 958

## Beschreibung

Die Erfindung betrifft eine Fahrerplattformaufhängung für landwirtschaftliche oder industrielle Fahrzeuge, insbesondere für Ackerschlepper gemäß den Merkmalen des Oberbegriffs des Patentanspruchs 1.

Insbesondere bei relativ langsam fahrenden Fahrzeugen, wie Ackerschleppern und dergleichen, ist die Fahrerplattform, auf der eine Fahrerkabine oder ein Vierpfostenüberschlagschutz montiert sein kann, meist ungefedert oder lediglich über Puffer- oder Gummielemente am Fahrzeugrumpf befestigt (EP-A-0 099 526, EP-A-0 151 332). Diese Elemente sind wegen ihrer geringen Federwege nur zur Körperschallisolierung, nicht aber zur Federung der Fahrerplattform geeignet. Niederfrequente mechanische Schwingungen, die durch Fahrbahnunebenheiten angeregt werden, können ungedämpft auf den Befestigungspunkt des Fahrersitzes einwirken. Um ein gewisses Ausmaß an Fahrkomfort zu gewährleisten, werden die Hub-, Horizontal-, Quer- und Nickschwingungen durch einen gefederten Fahrersitz aufgenommen.

Aus ergonomischen Gründen sollte die Sitzfederung nicht zu weich ausgelegt werden, da dies die Federwege erhöht und zu relativ großen Relativbewegungen zwischen den Bedienungselementen und dem Fahrer führen kann. Der Fahrer kann daher bei stoßartigen Belastungen leicht den Kontakt zu den fahrerplattformfesten Bedienungselementen und Stellgliedern verlieren. Durch diese Einschränkungen für die Schwingungsisolation ergibt sich eine Sitzfederung, deren Resonanzfrequenz im Bereich der Resonanzfrequenzen einiger innerer menschlicher Organe liegen kann, was als unangenehm empfunden wird. Die Sitzfederung verhindert auch nicht die Schwingungseinleitung durch an der Fahrerplattform befestigte Bedienungselemente.

Aus den angeführten Gründen ist eine Federung der gesamten Fahrzeugkabine mit niederfrequenten Eigenfrequenzen wünschenswert. Die auf den Fahrer einwirkenden mechanischen Schwingungen sollen verringert werden, so daß dem Fahrer eine längere tägliche Arbeitszeit mit dem Schlepper bei höheren Fahrzeuggeschwindigkeiten zugemutet werden kann, ohne daß gesundheitliche Beeinträchtigungen zu befürchten sind.

Die EP-B1-0 273 796 beschreibt eine elastische Federung für die Kabine eines landwirtschaftlichen Schleppers, bei der zwischen einem steifen Fahrwerk einerseits und mit der Kabine verbundenen Queraufbauten andererseits elastische Federbeine zur Aufnahme von Schwingungen vorgesehen sind. Diese Federung läßt auch Nickschwingungen um die Querachse zu, die dem Fahrer einen taumeligen Eindruck vermitteln und ihm die Beherrschung des Fahrzeuges erschweren können. Die bekannte Konstruktion erfordert eine Vielzahl von Panhardstäben zur Aufnahme von Horizontalkräften und ist relativ aufwendig. Ferner erweist sich die Abstimmung der Federelemente als schwierig.

Aus der DE-A-25 48 749 geht eine Fahrerhausaufhängung der gattungsbildenden Art für einen Lastkraftwagen mit einenends am Fahrerhaus und anderenends am Fahrgestellrahmen angelenkten, längsliegenden Lenkerarmen und zwischen dem Fahrerhaus und dem Fahrgestellrahmen angeordneten Feder- und Dämpfereinheiten sowie einem die Lenkerarme verbindenden, querliegenden Torsionsstab-Stabilisator hervor. Um den Fahrkomfort verbessernde Federeigenschaften mit geringer Federkonstante einsetzen zu können, ohne daß hierdurch unerwünschte Nick- und Schaukelbewegungen des Fahrerhauses in Kauf genommen werden müssen, wird vorgeschlagen, daß die vorderen und hinteren Lenkerarme sich von ihren Anlenkpunkten am Fahrerhaus zu ihren Anlenkpunkten am Fahrgestellrahmen schräg nach unten und hinten erstreckend angeordnet sind. Ferner sind die Feder- und Dämpfereinheiten von sich einerseits am Fahrerhaus und andererseits am Fahrgestellrahmen abstützenden Luftfedern mit pneumatischer Regulierung und hydraulischen Stoßdämpfern mit integrierten Druck- und Zuganschlägen gebildet. Die vorderen Lenkerarme nehmen gegenüber einer Horizontalebene einen kleineren spitzen Winkel ein als die hinteren Lenkerarme. Somit treffen sich die Fluchtlinien der Lenkerarme weit hinter dem Fahrerhaus in etwa in Höhe der Fahrbahn. Diese Anordnung ist insbesondere bei Ackerschleppern verbesserungsfähig, da sie beim Beschleunigen und Bremsen zu unerwünschten Federbewegungen, insbesondere Nickbewegungen des Fahrerhauses führen kann.

Die GB-A-2 244 745 beschreibt eine Fahrzeugkabinenbefestigung für Reinigungsfahrzeuge, bei denen die Kabine vorne am Fahrzeug angeordnet ist und sich über Schraubenfedern und zugehörige Dämpfer am Fahrzeugchassis abstützt. Zwischen der Kabine und dem dahinter liegenden Fahrzeugrumpf sind übereinanderliegende Lenker angelenkt, die zwei Seiten eines Parallelogramms bilden und die eine begrenzte Relativbewegung zwischen der Kabine und dem Fahrzeugrumpf zulassen. In Ruhestellung erstreckt sich der obere Lenker in einer horizontalen Ebene, die im wesentlichen durch den Schwerpunkt der Kabine verläuft. Hierdurch sollen die durch das Nicken beim Bremsen hervorgerufenen Trägheitkräfte kompensiert und die Chassisdynamik verbessert werden. Diese Lenkeranordnung ist jedoch beispielsweise bei Ackerschleppern wegen deren Geometrie nicht anwendbar.

Die der Erfindung zugrunde liegende Aufgabe wird darin gesehen, eine Fahrerplattformaufhängung für landwirtschaftliche oder industrielle Fahrzeuge, insbesondere für Ackerschlepper, anzugeben, die unter Vermeidung der genannten Probleme die Fahrerplattform weitgehend von Schwingungen des Fahrzeugunterbaus abkoppelt. Es sollen die in der vertikalen Fahrzeuglängsebene auftretenden Schwingungen isoliert und abgefedert werden, während die Abstützung von Querkräften auf relativ steife Weise erfolgt. Insbesondere sollen Federbewegungen der Fahrerplattform oder Kabine beim Bremsen oder Beschleunigen vermieden werden.

Die Aufgabe wird ausgehend von dem Oberbegriff des Patentanspruches 1 durch dessen kennzeichnende Merkmale gelöst.

Weitere vorteilhafte Ausgestaltungen und Weiterbildungen der Erfindung gehen aus den Unteransprüchen hervor.

Die Fahrerplattform oder Kabine wird vorzugsweise an jeder Seite von zwei Längslenkern unterschiedlicher Schrägstellung geführt. Durch die Längslenker werden die Freiheitsgrade der Fahrerplattformbewegung begrenzt, so daß sich die Fahrerplattform relativ zum Fahrzeugunterbau im wesentlichen lediglich in vertikaler Richtung und in Fahrtrichtung bewegen kann. Eine Verschiebung quer zur Fahrtrichtung ist jedoch weitgehend ausgeschlossen und kann erforderlichenfalls durch Querlenker verhindert werden.

Es hat sich herausgestellt, daß die Verwendung von Längslenkern unterschiedlicher Schrägstellung hinsichtlich der aufzunehmenden Lenkerkräfte günstiger ist als die Verwendung von parallelen Längslenkern, denn bei Parallel ausgerichteten Längslenkern können relativ hohe Lenkerkräfte auftreten. Parallele Lenkslenker bieten auch nicht die Möglichkeit, das Momentanzentrum der Kabine in gewünschter Weise zu beeinflussen, da dieses bei parallelen Längslenkern im Unendlichen liegt.

Neben der Führung der Fahrerplattform wird diese durch geeignete Federelemente elastisch an den Fahrzeugunterbau angebunden, wobei diese elastische Anbindung keine zusätzliche Fesselung von Freiheitsgraden übernehmen muß. Beispielsweise können für die Federung an jeder Fahrerplattformseite je eine Spiral- oder Luftfeder eingesetzt werden. Ferner ist vorzugsweise eine Schwingungsdämpfung zwischen Fahrerplattform und Fahrzeugunterbau vorgesehen. Es eignen sich beispielsweise hydraulische Dämpfer, die zwischen dem Fahrzeugunterbau und der Fahrerplattform eingesetzt werden. Die erfindungsgemäße Lösung ermöglicht es, die Anbindung der Fahrerplattform an den Fahrzeugunterbau in die drei Teilfunktionen Führung, Federung und Dämpfung zu zerlegen, für die jeweils unabhängige und optimal ausgewählte Baukomponenten ausgewählt werden können.

Vorzugsweise sind bezüglich der Fahrtrichtung im Bereich jeder der beiden Seiten der Fahrerplattform wenigstens zwei im wesentlichen hintereinander liegende Längslenker angeordnet. Diese Längslenker lassen sich gut in die gegebenen Freiräume des Fahrzeuges, insbesondere des Ackerschleppers einfügen, so daß die Verwendung von Längslenkern bei einem vorhandenen Fahrzeug nicht dessen grundlegende Umkonstruktion erfordert.

Die Längsachsen aller Längslenker schneiden eine virtuelle, im wesentlichen quer zur Fahrtrichtung und horizontal ausgerichtete Drehachse. Durch diese Lenkeranordnung wird ein Momentanzentrum vor bzw. hinter der Fahrerplattform ausgebildet. Bei einer Relativbewegung zwischen Fahrerplattform und Fahrzeugunterbau dreht sich daher die Fahrerplattform und gegebenenfalls die darauf aufgebaute Fahrerkabine um die virtuelle Drehachse. Es läßt sich ein relativ großer Abstand zwischen dem Sitz-Index-Punkt und Drehachse verwirklichen. Damit wird vermieden, daß die Kabine bei Federbewegungen zu große Neigungswinkel einnimmt.

Vorzugsweise ist der Abstand zwischen dem Sitz-Index-Punkt und der virtuellen Drehachse über große Bereiche des gesamten Federwegs größer als ein Meter. Das bedeutet, daß der Fahrer die Drehbewegung der Fahrerplattform oder der Kabine im Vergleich zur Hubbewegung nur geringfügig empfindet.

Durch die erfindungsgemäße Wahl der Lenkerwinkel relativ zur Horizontalen läßt sich das Momentanzentrum, das sich bei Neutralstellung der Fahrerplattform, d. h. bei der Mittellage der Federung, einstellt, ungefähr auf die Höhe des Schwerpunktes der Fahrerplattform oder der darauf aufgebauten Kabine einstellen. Durch die Winkelbewegung der Längslenker rückt die virtuelle Drehachse in die Wirkungslinie der beim Bremsen und Beschleunigen auftretenden Horizontalkraft. Es entsteht ein kinematisch stabiler Zustand, bei dem die Horizontalkraft auf die virtuelle Drehachse zielt. Dadurch kommt es zu keiner zusätzlichen Federbewegung. Durch diese Anordnung wird eine Federbewegung der Fahrerplattform oder Kabine bei Änderungen der Fahrgeschwindigkeit, z. B. beim Bremsen vermieden.

Zweckmäßigerweise liegen die beiden Längslenker in Fahrtrichtung hintereinander und schließen je mit der Horizontalen einen Winkel ein. Dieser Winkel ist vorzugsweise kleiner als 45°. Es ist zweckmäßig, die vorderen Längslenker steiler (etwa 30°) als die hinteren Längslenker (etwa 15°) zur Horizontalen zu neigen. Dadurch liegt die virtuelle Drehachse in der Mittellage der Federung ungefähr auf der Höhe des Kabinenschwerpunktes. Die virtuelle Drehachse verändert ihre Lage abhängig vom zurückgelegten Federweg der Kabinenführung.

Bei gegebener vertikaler Hubfedersteifigkeit läßt sich die horizontale Federsteifigkeit über die Auswahl der Anstellwinkel der Längslenker einstellen.

Gemäß einer bevorzugten Ausgestaltung der Erfindung befinden sich zwischen der Fahrerplattform und dem Fahrzeugunterbau wenigstens zwei Federeinrichtungen, die auf beiden Seiten der Fahrerplattform in deren Schwerpunktsebene, die quer zur Fahrtrichtung aufgespannt ist, angeordnet sind.

Die federmäßige Anbindung der Fahrerplattform oder Kabine an den Fahrzeugunterbau kann beispielsweise durch zwei Luftfedern, zwei hydropneumatische Federn oder zwei Schraubenfedern erfolgen. Vorzugsweise befinden sich die Federn auf der linken und rechten Seite der Fahrerplattform. Sie stützen ungefähr im Fahrerplattformschwerpunkt die Fahrerplattform ab und ermöglichen insbesondere vertikale Schwingungen der Fahrerplattform.

Bei Verwendung von Luftfedern oder Schraubenfedern als Federeinrichtung können zweckmäßigerweise Schwingungsdämpfer vorgesehen sein, die neben den Federelementen liegen bzw. in diese integriert sind. Sind die Federelemente hydropneumatische Federn, läßt sich die Schwingungsdämpfung durch eingebaute Drosselelemente erreichen.

Zur Erhöhung der Wankfedersteifigkeit werden vorzugsweise wenigstens zwei in Fahrtrichtung nebeneinander liegende Längslenker, beispielsweise die hinteren Längslenker, durch einen Torsionsstabilisator miteinander verbunden und damit in ihrer Bewegung elastisch gekoppelt.

Durch die erfindungsgemäße Anordnung der Federungskinematik läßt sich eine sehr gute Vertikalfederung und eine beeinflußbare Wankfedersteifigkeit bei annähernd fehlender Horizontalfedersteifigkeit erzielen. Unerwünschte Nickbewegungen der Fahrerplattform oder Kabine können vermieden werden. Durch die optimale Isolation von Vertikal- und Wankschwingungen bleibt dem Fahrer ein sicheres Fahrgefühl erhalten, das nicht durch einen taumeligen Eindruck getrübt ist und das eine sichere Beherrschbarkeit des Fahrzeugs ermöglicht.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Seitenansicht einer über einem Fahrzeugunterbau angeordneten Fahrerplattform,
- Fig. 2: eine Aufsicht der in Fig. 1 dargestellten Anordnung und
- Fig. 3: in einem Diagramm die Lage des Momentanzentrums als Funktion des Federweges.

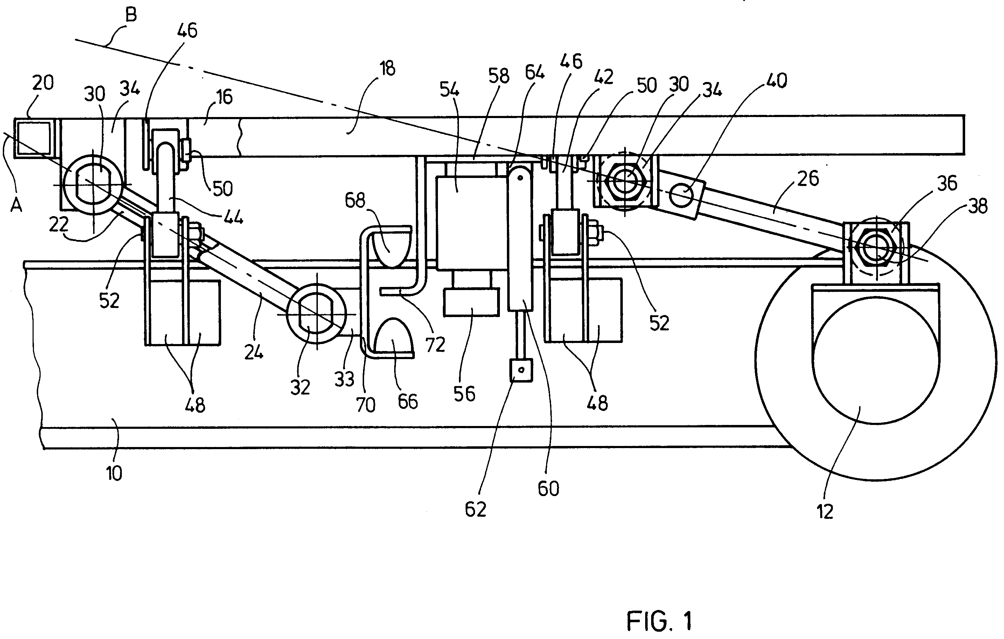

Gemäß Fig. 1 besteht der Fahrzeugunterbau aus einem schematisch und lediglich teilweise dargestellten Fahrzeugrahmen 10, wie er beispielsweise bei modernen Ackerschleppern verwendet wird, sowie dem im hinteren Bereich des Fahrzeugrahmens 10 befestigten Achstrichter 12, an dem die nicht dargestellten Hinterräder des Schleppers angeordnet sind. Bei Blockbauweise kann jedoch als Fahrzeugunterbau auch das Motor- und/oder Getriebegehäuse dienen.

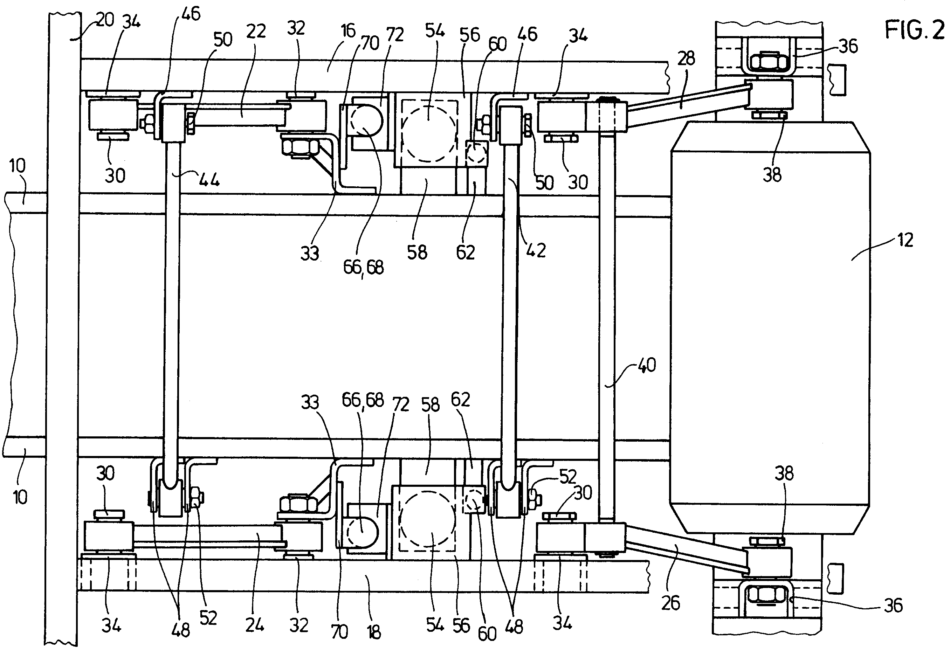

Oberhalb des Fahrzeugrahmens 10 ist ein Teil des Kabinenrahmens dargestellt, auf den eine nicht näher gezeigte Fahrerkabine aufgebaut werden kann. Wie insbesondere aus Fig. 2 hervorgeht, besteht der Kabinenrahmen im wesentlichen aus zwei Seitenholmen 16, 18, einem diese Seitenholme 16, 18 miteinander verbindenden vorderen Querholm 20 und einem nicht gezeigten die Seitenholme 16, 18 miteinander verbindenden hinteren Querholm. Die Holme 16, 18, 20 des Kabinenrahmens bestehen im beschriebenen Ausführungsbeispiel aus Profilrohren mit quadratischem Querschnitt.

Die Seitenholme 16, 18 des Kabinenrahmens sind an dem Fahrzeugrahmen 10 über zwei vordere Längslenker 22, 24 und zwei hintere Längslenker 26, 28 angelenkt. Die Längslenker 22, 24, 26, 28 tragen an ihren jeweiligen Enden quer zur Fahrtrichtung und horizontal ausgerichtete Buchsen, die der drehbaren Aufnahme von Schraubenbolzen 30, 32, 38 dienen. Der mittlere Bereich der Längslenker 22, 24, 26, 28 weist ein T-förmiges Profil mit einer hohen Biege- und Verdrehsteifigkeit auf.

Zur Befestigung der Längslenker 22, 24, 26, 28 sind an der Unterseite der Seitenholme 16, 18 des Kabinenrahmens je zwei U-förmig ausgebildete Anschweißstücke 34 angeschweißt, die je einen der genannten, von den Lenkerbuchsen aufgenommenen Schraubenbolzen 30 tragen. Auf jeder Seite des Fahrzeugrahmens 10 ist je eine versteifte, winkelförmige Rahmenkonsole 33 festgeschweißt, die einen weiteren Schraubenbolzen 32, der von der zugehörigen Buchse eines der vorderen Längslenker 22, 24 aufgenommen wird, trägt. Ferner ist an jedem Ende des Achstrichters 12 eine Lenkerbefestigungskonsole 36 festgeschraubt, die einen Schraubenbolzen 38, der von der Buchse eines der hinteren Längslenker 26, 28 aufgenommen wird, trägt.

Die Schraubenbolzen 30, 32, 38 sind quer zur Fahrtrichtung und horizontal ausgerichtet und bilden die Gelenkachsen für die Längslenker 22, 24, 26, 28. Auch wenn die hinteren Längslenker 26, 28 nach hinten leicht auseinander laufen, liegen die beiden linken sowie die beiden rechten Längslenker jeweils hintereinander im wesentlichen innerhalb in Fahrtrichtung weisenden senkrechten Ebenen.

Wie aus Fig. 1 hervorgeht, sind die beiden vorderen Längslenker 22, 24 gegenüber der Horizontalen stärker geneigt als die hinteren Längslenker 26, 28. Der Neigungswinkel der vorderen Längslenker 22, 24 beträgt ca. 30° und der der hinteren Längslenker 26, 28 ca 16°. Durch die unterschiedliche Neigung treffen sich die Fluchtlinien A und B der vorderen und hinteren Längslenker 22, 24, 26, 28 im Endlichen. Sie schneiden sich auf einer virtuellen, im wesentlichen quer zur Fahrtrichtung und horizontal ausgerichteten Drehachse, die vor der Fahrerkabine liegt, jedoch in der Fig. 1 aus Platzgründen nicht eingezeichnet wurde. Diese Drehachse bildet das Momentanzentrum, um die sich die Fahrzeugkabine bei Federbewegungen gegenüber dem Fahrzeugrahmen 10 dreht. Das Momentanzentrum liegt so weit vor dem Fahrersitz, insbesondere vor dem Sitz-Index-Punkt SIP, daß der Fahrer bei Federbewegungen im wesentlichen nur Hubbewegungen und keine Drehbewegungen wahrnimmt. Das Momentanzentrum liegt ferner in etwa auf der Höhe des Kabinenschwerpunktes SP, so daß bei Geschwindigkeitsänderungen des Fahrzeugs keine nennenswerten resultierenden Trägheitskräfte auftreten, durch die eine Verdrehung der Fahrerkabine um das Momentanzentrum veranlaßt werden könnte.

Durch die Anbindung der Fahrerkabine an dem Fahrzeugrahmen 10 mittels der formstabilen Längslenker 22, 24, 26, 28 ist eine Relativbewegung der Fahrerkabine nur innerhalb einer Ebene möglich, die senkrecht und in Fahrtrichtung ausgerichtet ist. Freiheitsgrade quer zur Fahrtrichtung werden durch zwei Querlenker 42, 44 unterdrückt.

Zur Erhöhung der Wankfedersteifigkeit ist zwischen den beiden hinteren Längslenkern 26, 28 in deren vorderen Bereich ein Torsionsstabilisator 40 drehfest eingespannt. Ferner sind zwei Querlenker 42, 44 vorgesehen, deren jeweils beide Enden über entsprechende Anschweißwinkel 46, 48 und Schraubenbolzen 50, 52 gelenkig mit dem linken Holm des Fahrzeugrahmens 10 bzw. dem rechten Seitenholm 16 des Kabinenrahmens in Verbindung stehen.

Die federmäßige Anbindung des Kabinenrahmens an dem Fahrzeugrahmen 10 erfolgt durch zwei seitlich angeordnete Luftfedern 54, die sich je über eine Rahmenkonsole 58 und eine Kabinenkonsole 56 an dem Fahrzeugrahmen 10 und an den Seitenholmen 16, 18 des Kabinenrahmens abstützen. Die Luftfedern 54 liegen hinsichtlich der Fahrzeuglängserstreckung in etwa auf der Höhe des Kabinenschwerpunkts SP.

Um die Kabinenbewegungen zu dämpfen, sind zwei seitlich angeordnete Schwingungsdämpfer 60 vorgesehen, die in der Nähe der Luftfedern 54 liegen und sich gelenkig über je eine Rahmenkonsole 62 und eine Kabinenkonsole 64 an dem Fahrzeugrahmen 10 und an den Seitenholmen 16, 18 des Kabinenrahmens abstützen.

Zur Begrenzung des Federweges sind ferner seitlich zwei Parabelpuffer vorgesehen, die je zwei sich gegenüberstehende und zueinander beabstandete parabelförmige elastische Elemente 66, 68 aufweisen. Die Elemente 66, 68 eines Parabelpuffers sind über eine Konsole 70 an dem Fahrzeugrahmen 10 befestigt. Zwischen den Elementen 66, 68 erstreckt sich eine mit den Seitenholmen 16, 18 des Kabinenrahmens verbundene Zunge 72.

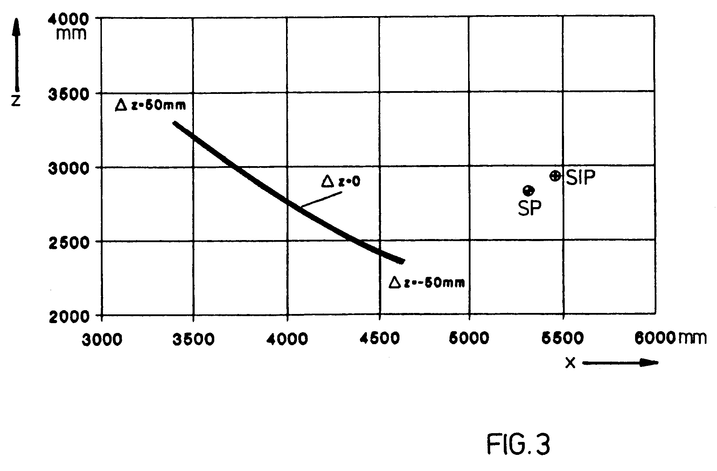

In Fig. 3 ist die Lage des Momentanzentrums als Funktion des Federweges in einem Koordinatensystem dargestellt, bei dem z die vertikale Achse und x die Achse in Fahrtrichtung bezeichnen. In dem Diagramm ist ferner die Lage des Schwerpunktes SP und des Sitz-Index-Punktes SIP dargestellt. Es ist ersichtlich, daß der Abstand zwischen dem Sitz-Index-Punkt SIP und dem Momentanzentrum über große Bereiche des Gesamtfederweges größer ist als ein Meter. Nur bei voller Einfederung (Delta z = - 50 mm) rückt das Momentanzentrum näher an die Kabine heran. Das Momentanzentrum liegt bei Mittellage der Federung (Delta z = 0) knapp unterhalb der Schwerpunkthöhe. Beim Bremsen in dieser Mittellage versucht daher eine Massenkraft, die Kabine auszufedern. Dadurch verschiebt sich das Momentanzentrum nach oben, und es bildet sich ein stabiler Gleichgewichtszustand aus, bei dem die Massenkraft durch Bremsen auf das Momentanzentrum zielt. Dieses Gleichgewicht stellt sich in der Nähe der Federungsmittellage ein. Das bedeutet, daß es beim Bremsen nicht zu großen Nickbewegungen der Kabine kommt. Beim Anfahren jedoch versucht die entstehende Massenkraft, die Kabine einzufedern. Dadurch wandert das Momentanzentrum noch weiter nach unten. Der Hebelarm für die angreifende Horizontalkraft wird größer, was ein weiteres Einfedern begünstigt, so daß dieser Zustand kinematisch instabil ist. Die Bewegung der Kabine kann hierbei durch die Hubfederung aufgefangen werden.

## Patentansprüche

1. Fahrerplattformaufhängung für landwirtschaftliche oder industrielle Fahrzeuge, insbesondere für Ackerschlepper, mit wenigstens einem zwischen Fahrzeugunterbau (10) und Fahrerplattform (16, 18, 20) angeordneten Federelement (54) und wenigstens zwei im wesentlichen in einer senkrechten, in Fahrzeuglängsrichtung ausgerichteten Ebene liegenden und in Fahrtrichtung hintereinander angeordneten Längslenkern (22, 24, 26, 28), deren jeweils erster Endbereich gelenkig mit dem Fahrzeugunterbau (10) und deren jeweils zweiter Endbereich gelenkig mit der Unterseite der Fahrerplattform (16, 18, 20) verbunden ist, wobei die Gelenkachsen (30, 32, 38) im wesentlichen horizontal und quer zur Fahrtrichtung ausgerichtet sind und die beiden Längslenker (22, 24, 26, 28) einen Winkel miteinander einschließen, derart, daß die Längsachsen (A, B) aller Längslenker (22, 24, 26, 28) eine virtuelle, im wesentlichen quer zur Fahrtrichtung und horizontal ausgerichtete Drehachse schneiden, die das Momentanzentrum bildet, und die weit vor oder hinter dem Fahrersitz liegt, so daß durch diese Wahl der Lage der virtuellen Drehachse der Fahrer bei einer Einfederung der Fahrerplattform (16, 18, 20) im wesentlichen nur Hubbewegungen und keine Drehbewegungen empfindet,
dadurch gekennzeichnet, daß die Drehachse in etwa in der Höhe des Schwerpunktes der Fahrerplattform (16, 18, 20) bzw. bei aufgebauter Kabine des Kabinenschwerpunktes (SP) liegt.

2. Fahrerplattformaufhängung nach Anspruch 1, dadurch gekennzeichnet, daß bezüglich der Fahrtrichtung im Bereich jeder der beiden Seiten der Fahrerplattform (16, 18, 20) wenigstens zwei im wesentlichen hintereinander liegende Längslenker (22, 24, 26, 28) angeordnet sind.

3. Fahrerplattformaufhängung nach Anspruch 1 oder 2, dadurch gekennzeichnet, daß auf beiden Seiten der Fahrerplattform (16, 18, 20) zwischen der Fahrerplattform (16, 18, 20) und dem Fahrzeugunterbau (10) wenigstens zwei Federeinrichtungen (54) angeordnet sind, die in etwa in der senkrecht zur Fahrtrichtung ausgerichteten Ebene liegen, in der der Fahrerplattformschwerpunkt (SP) liegt.

4. Fahrerplattformaufhängung nach einem der Ansprüche 1 bis 3, dadurch gekennzeichnet, daß Schwingungsdämpferelemente (60) zwischen Fahrerplattform (16, 18, 20) und Fahrzeugunterbau (10) vorgesehen sind.

5. Fahrerplattformaufhängung nach einem der Ansprüche 1 bis 4, dadurch gekennzeichnet, daß wenigstens zwei in Fahrtrichtung nebeneinander liegende Längslenker (26, 28) durch einen Torsionsstabilisator (40) miteinander verbunden sind.

6. Fahrerplattformaufhängung nach einem der Ansprüche 1 bis 5, dadurch gekennzeichnet, daß zur Aufnahme von horizontalen Querkräften Querlenker (42, 44) vorgesehen sind.

## Claims

1. Driver's platform suspension for agricultural or industrial vehicles, in particular for farm tractors, with at least one spring element (54) arranged between vehicle chassis (10) and driver's platform (16, 18, 20) and at least two longitudinal control arms (22, 24, 26, 28) which are located essentially in a vertical plane oriented in the longitudinal direction of the vehicle and arranged one behind the other in the direction of travel, and of which the first end region is pivotably connected to the vehicle chassis (10) and the second end region is pivotably connected to the lower side of the driver's platform (16, 18, 20), wherein the articulated axles (30, 32, 38) are oriented essentially horizontally and transversely to the direction of travel and the two longitudinal control arms (22, 24, 26, 28) form an angle with each other such that the longitudinal axes (A, B) of all the longitudinal control arms (22, 24, 26, 28) intersect with a virtual axis of rotation which is oriented essentially transversely to the direction of travel and horizontally and which forms the instantaneous centre, and which is located well in front of or behind the driver's seat, so that due to this choice of position of the virtual axis of rotation in case of jouncing of the driver's platform (16, 18, 20) the driver essentially perceives only lifting movements and no rotary movements, characterised in that the axis of rotation is located more or less at the height of the centre of gravity of the driver's platform (16, 18, 20) or, if a cab is built on, of the centre of gravity (SP) of the cab.

2. Driver's platform suspension according to claim 1, characterised in that with respect to the direction of travel in the region of each of the two sides of the driver's platform (16, 18, 20) are arranged at least two longitudinal control arms (22, 24, 26, 28) located essentially one behind the other.

3. Driver's platform suspension according to claim 1 or 2, characterised in that on both sides of the driver's platform (16, 18, 20) between the driver's platform (16, 18, 20) and the vehicle chassis (10) are arranged at least two spring devices (54) located more or less in the plane which is oriented perpendicularly to the direction of travel and in which is located the centre of gravity (SP) of the driver's platform.

4. Driver's platform suspension according to any of claims 1 to 3, characterised in that vibration damper elements (60) are provided between driver's platform (16, 18, 20) and vehicle chassis (10).

5. Driver's platform suspension according to any of claims 1 to 4, characterised in that at least two longitudinal control arms (26, 28) located adjacent to each other in the direction of travel are connected to each other by a torsion stabilizer (40).

6. Driver's platform suspension according to any of claims 1 to 5, characterized in that transverse control arms (42, 44) are provided for taking up horizontal transverse forces.

## Revendications

1. Suspension de plate-forme de conducteur pour des véhicules agricoles ou industriels, notamment pour tracteurs agricoles, comportant au moins un élément de ressort (54), disposé entre le châssis (10) du véhicule et la plate-forme du conducteur (16,18,20), et au moins deux bras articulés longitudinaux (22,24,26,28), qui sont situés essentiellement dans un plan vertical orienté dans la direction longitudinale du véhicule et sont disposés l'un derrière l'autre dans la direction de déplacement et dont respectivement une première partie d'extrémité est reliée de façon articulée au châssis (10) du véhicule et dont respectivement la seconde partie d'extrémité est reliée de façon articulée à la face inférieure de la plate-forme du conducteur (16,18,20), et dans lequel les axes d'articulation (30,32,38) sont orientés essentiellement horizontalement et transversalement par rapport à la direction de déplacement et les deux bras articulés longitudinaux (22,24,26,28) font entre eux un angle tel que les axes longitudinaux (A,B) de tous les bras articulés longitudinaux (22,24,26,28) recoupent un axe virtuel de rotation, qui est orienté essentiellement transversalement par rapport à la direction de déplacement et horizontalement et qui forme le centre instantané et qui est situé très en avant ou en arrière du siège du conducteur de sorte que grâce à ce choix de la position de l'axe virtuel de rotation, le conducteur ressent essentiellement seulement des déplacements de soulèvement et aucun mouvement de rotation dans le cas d'un débattement élastique de la plate-forme du conducteur (16,18,20), caractérisée en ce que l'axe de rotation est situé approximativement à hauteur du centre de gravité de la plate-forme du conducteur (16,18,20) ou, lorsque la cabine est montée, à la hauteur du centre de gravité (SP) de la cabine.

2. Suspension de plate-forme de conducteur selon la revendication 1, caractérisée en ce qu'au moins deux bras articulés longitudinaux (22,24,26,28), situés essentiellement l'un derrière l'autre, sont disposés, par rapport à la direction de déplacement, dans la zone située entre chacun des deux côtés de la plate-forme du conducteur (16,18,20).

3. Suspension de plate-forme de conducteur selon la revendication 1 ou 2, caractérisée en ce que des deux côtés de la plate-forme du conducteur (16,18,20) et entre cette plate-forme du conducteur (16,18,20) et le châssis (10) du véhicule sont disposés au moins deux dispositifs à ressorts (54), qui sont situés approximativement dans le plan orienté perpendiculairement à la direction de déplacement et dans lequel est situé le centre de gravité (SP) de la plate-forme du conducteur.

4. Suspension de plate-forme de conducteur selon l'une des revendications 1 à 3, caractérisée en ce que des éléments amortisseurs (60) sont prévus entre la plate-forme du conducteur (16,18,20) et le châssis (10) du véhicule.

5. Suspension de plate-forme de conducteur selon l'une des revendications 1 à 4, caractérisée en ce qu'au moins deux bras articulés longitudinaux (26,28), qui sont situés côte-à-côte dans la direction de déplacement, sont reliés entre eux par un stabilisateur de torsion (40).

6. Suspension de plate-forme de conducteur selon l'une des revendications 1 à 5, caractérisée en ce que des bras articulés transversaux (42,44) sont prévus pour l'absorption de forces transversales horizontales.
